**Europäisches Patentamt**

**European Patent Office**

**Office européen des brevets**

(11) Numéro de publication : **0 373 685 B1**

(12) **FASCICULE DE BREVET EUROPEEN**

(45) Date de publication du fascicule du brevet :
**15.07.92 Bulletin 92/29**

(51) Int. Cl.⁵ : **B23P 19/00,** B27F 7/13,
B65G 51/02

(21) Numéro de dépôt : **89202927.3**

(22) Date de dépôt : **20.11.89**

(54) **Procédé de distribution de pièces telles que rivets, et dispositifs de mise en oeuvre.**

(30) Priorité : **08.12.88 FR 8816292**

(43) Date de publication de la demande :
**20.06.90 Bulletin 90/25**

(45) Mention de la délivrance du brevet :
**15.07.92 Bulletin 92/29**

(84) Etats contractants désignés :
**AT BE CH DE ES FR GB GR IT LI LU NL SE**

(56) Documents cités :
**DE-A- 3 148 990**
**DE-C- 337 935**
**GB-A- 2 067 149**

(73) Titulaire : **ATELIERS DE LA HAUTE-GARONNE
- ETABLISSEMENTS AURIOL & Cie S.a.R.L.
Flourens
F-31130 Balma (FR)**
Titulaire : **Auriol, Jean-Marc
Les Blanches Flourens
F-31130 Balma (FR)**
Titulaire : **Bornes, Philippe
La Madeleine Flourens
F-31130 Balma (FR)**

(72) Inventeur : **Auriol, Jean-Marc
Les Blanches Flourens
F-31130 Balma (FR)**
Inventeur : **Bornes, Philippe
La Madeleine Flourens
F-31130 Balma (FR)**

(74) Mandataire : **Barre, Philippe
Cabinet Barre-Gatti-Laforgue 95 rue des
Amidonniers
F-31069 Toulouse Cédex (FR)**

## Description

L'invention concerne un procédé et un dispositif de distribution de pièces identiques présentant une symétrie de révolution autour d'un axe, telles par exemple que des rivets. Elle vise à distribuer les pièces de façon qu'elle se présente avec leur axe de révolution aligné selon une direction donnée en vue de leur utilisation (par exemple, opération de rivetage pour des rivets). Elle s'étend à un dispositif de distribution et un dispositif de conditionnement de pièces à symétrie de révolution, en vue de la mise en oeuvre du procédé visé. L'invention s'applique dans tous les cas où des pièces identiques présentant une symétrie de révolution sont à distribuer séquentiellement avec leur axe de direction prédéfinie, en particulier distribution de rivets vers un outil ou une machine à riveter pour réaliser un rivetage automatique.

Il est bien connu de transférer des rivets dans des tubes à l'aide d'air comprimé. Les rivets sont rangés en colonne dans le tube qui les guide et l'air comprimé est admis à une extrémité de celui-ci afin de repousser toute la colonne et ainsi d'engendrer l'expulsion des rivets, les uns après les autres, à l'autre extrémité. Les avantages essentiels d'un tel système résident dans sa simplicité et dans le fait qu'il permet une distribution de chaque rivet dans une position définie, se prêtant à l'alimentation d'une machine automatique.

Toutefois, ce procédé de transfert ne donne des résultats satisfaisants que si les rivets sont en très petit nombre dans le tube ; en effet, dès que ce nombre croît au-delà de quelques unités, on constate un blocage de l'ensemble, dû aux effets cumulés de coincement mécanique et pneumatique de chaque rivet dans le tube, chacun de ceux-ci se comportant comme un segment de piston dans un cylindre. Ce phénomène se produit quelle que soit la pression pneumatique mise en oeuvre, car si une élévation de la pression accroît la poussée sur la colonne de rivets, elle accroît également l'effet de coincement de chaque rivet, de sorte qu'une élévation de pression même substantielle ne permet pas en pratique d'augmenter notablement le nombre de rivets qui peuvent être disposés dans le tube de distribution. En conséquence, un tel processus de distribution est utilisable actuellement pour transférer des rivets à l'unité ou en petit nombre d'un point à un autre, mais non pour permettre de distribuer des rivets à partir d'un tube dans lequel ils auraient été préalablement disposés en grand nombre. Cette limitation a des conséquences pratiques capitales : le procédé actuel n'est pas compatible avec un stockage des rivets en nombre dans le tube de distribution et suppose une alimentation de l'entrée du tube au fur et à mesure du transfert (des moyens de distribution devant donc être prévus en amont du tube). Dans ces conditions, le procédé de transfert pneumatique par tube qui est actuellement connu résoud le problème de transport des rivets d'un point à un autre, (ou plus généralement des pièces à symétrie de révolution autour d'un axe) mais non celui de leur stockage et de leur distribution séquentielle sur le lieu d'utilisation.

Par ailleurs, les brevets GB-A-2.067.149 qui décrit l'état de la technique le plus proche, et DE-A-3.148.990 décrivent un procédé de distribution pneumatique d'écrous d'un type particulier ("self-piercing nuts"), mais ce procédé est limité à ce type spécifique de pièce.

La présente invention se propose de remédier aux limitations du procédé connu de distribution de rivets ou plus généralement de distribution de pièces présentant une symétrie de révolution autour d'un axe, afin de présenter chaque pièce avec son axe aligné dans une direction donnée.

L'objectif essentiel de l'invention est de permettre de faire circuler un nombre très élevé de ce type de pièces (sans limite théorique) pour les amener à se présenter une à une, avec leur axe en position appropriée à l'entrée d'un outil ou d'une machine où elles doivent être mises en oeuvre, par exemple riveteuse dans le cas de rivets.

Un autre objectif est de résoudre le problème de stockage desdites pièces, en permettant au tube de distribution de jouer le rôle de tube de conditionnement de celles-ci.

Un autre objectif lié au précédent est de permettre une amélioration de l'homogénéité des pièces distribuées grâce à une plus grande sécurité de stockage (absence totale de manipulation sur le lot stocké depuis l'opération de stockage jusqu'à l'opération de distribution des pièces).

A cet effet, le procédé visé par l'invention pour la distribution de pièces identiques présentant une symétrie de révolution autour d'un axe, par exemple rivets, consiste à utiliser un tube présentant une âme creuse de forme adaptée à la section transversale de plus grand diamètre des pièces de façon à pouvoir assurer un guidage périphérique desdites pièces au niveau de cette section, à disposer les pièces les unes à la suite des autres à l'intérieur du tube avec leurs axes de révolution s'étendant selon l'axe longitudinal dudit tube et à alimenter ledit tube en fluide comprimé en vue d'assurer le transfert des pièces vers une extrémité ouverte dudit tube, dite extrémité de distribution ; selon la présente invention :

. les pièces sont préalablement conditionnées dans le tube avec des organes d'arrêt prévus à ses extrémités, l'organe d'arrêt situé à l'extrémité de distribution étant retiré avant d'assurer la distribution,

. l'on admet le fluide comprimé dans le tube à l'arrière de la dernière pièce par l'extrémité du tube opposée à l'extrémité de distribution, et on le distribue sur la longueur du tube à l'intérieur d'au moins une rainure longitudinale ménagée sur la surface interne dudit tube pour s'ouvrir dans l'âme creuse de celui-ci, de sorte que la pression du fluide s'exerce tout le long de l'âme creuse dans les espaces de séparation entre pièces, jusqu'à la première pièce sur laquelle ladite pression agit pour en assurer le transfert vers l'extrémité de distribution.

Par "rainure longitudinale", on entend toute forme ménagée en creux -quelle que soit sa section transversale- s'étendant le long de la paroi du tube, cette rainure pouvant être linéaire, hélicoïdale, ...

Le procédé de transfert pneumatique de rivets connu consiste à exercer une poussée pneumatique sur la dernière pièce de l'empilement (c'est-à-dire sur la pièce qui est située la plus en amont, à l'entrée du tube), cette poussée se transmettant mécaniquement de proche en proche de l'amont vers l'aval jusqu'à la première pièce (située en aval, devant l'extrémité de distribution) par appui des pièces les unes contre les autres ; au contraire dans le procédé de l'invention, la pression est distribuée à l'intérieur de la ou des rainures précitées tout le long du tube de sorte que les pièces intermédiaires sont en équipression, alors même que leur section de plus grand diamètre, guidée par le tube, réalise un effet de piston qui, en l'absence de rainure, s'opposerait à cette équipression ; on assure ainsi un guidage parfait des pièces permettant de garder leur axe dans l'alignement du tube, tout en évitant que les pièces intermédiaires soient soumises à un effort entraînant des effets de coincement, le pression venant s'exercer directement sur la première pièce qui est située en regard de l'extrémité ouverte de distribution. Cette première pièce se déplace vers l'extrémité de distribution jusqu'à être expulsée du tube avec son axe dans l'alignement de celui-ci, cependant que, de proche en proche -mais en partant de l'aval vers l'amont- les pièces se décalent sous l'effet des différences de pression transitoires auxquelles elles sont successivement soumises après déplacement de la première pièce. Le transfert et l'expulsion sont ainsi produits directement par le fluide comprimé (et non par des efforts mécaniques) et l'on supprime totalement les effets cumulés de coincement du procédé classique, tout en conservant un guidage parfait des pièces ; dans ces conditions, le nombre de pièces empilables dans le tube est sans limite.

Compte-tenu de la capacité important que le tube peut présenter, il est possible de conditionner préalablement les pièces dans le tube avec des organes d'arrêt qui seront mis en place à ses extrémités, immédiatement après l'opération de conditionnement. Un tel processus garantit qu'une pièce étrangère ne sera pas mélangée à l'ensemble ainsi stocké. Avant d'assurer la distribution, il suffit de retirer l'organe d'arrêt situé à l'extrémité de distribution et de brancher le fluide sous pression à l'autre extrémité.

Le procédé de l'invention est notamment applicable pour réaliser le stockage et la distribution de rivets sélectionnés dans une classe de tolérances déterminées. Un tel procédé peut apporter des avantages considérables dans le domaine du rivetage. En effet, la fabrication des rivets étant assurée de façon traditionnelle avec les tolérances habituelles, il est possible par une sélection préalable de séparer ces rivets en plusieurs lots correspondant chacun à une classe de tolérances beaucoup plus étroites que celles de l'ensemble initial (courbes de Gauss à base plus étroite) : après sélection, chaque lot est conditionné conformément à l'invention avec la garantie qu'aucun élément étranger ne sera mélangé au lot ; sur le lieu d'utilisation, le tube de stockage est directement branché sur la machine à riveter, laquelle est préalablement adaptée aux rivets concernés (diamètre de foret, bouterolle...). On réalisera ainsi une qualité de rivetage très supérieure à celle obtenue avec des rivets de tolérances habituelles (deuxième tête de volume invariable, contraintes axiales sur les tôles plus précises, tête préformée coopérant de façon plus précise avec les tôles...) et l'on supprime les arrêts importants actuellement produits sur les machines à riveter par des coincements de rivets, dus à une mauvaise homogénéité de ceux-ci.

L'invention s'étend à un dispositif de conditionnement et de distribution de pièces identiques pour la mise en oeuvre du procédé sus-défini ; ce dispositif comprend au moins un tube à âme creuse adaptée pour contenir et guider les pièces les unes à la suite des autres, au moins une rainure ménagée sur la surface interne du tube de façon à s'ouvrir dans son âme creuse sur la longueur de celle-ci, et des organes d'arrêt situés aux extrémités du tube pour retenir les pièces, l'organe d'arrêt situé à l'extrémité de distribution étant amovible.

D'autres caractéristiques, buts et avantages de l'invention ressortiront de la description qui suit en référence aux dessins annexés, lesquels en présentent à titre d'exemples non limitatifs des modes de réalisation ; sur ces dessins :

- la figure 1 est une vue en coupe axiale, à échelle dilatée, d'un dispositif de conditionnement et de distribution de rivets conforme à l'invention,
- la figure 2 en est une coupe transversale par un plan AA,
- les figures 3a, 3b et 3c sont des coupes partielles schématiques illustrant le procédé de distribution mis en oeuvre au moyen dudit dispositif,
- la figure 4 est une coupe transversale d'un autre mode de réalisation,
- la figure 5 est une vue d'ensemble schématique, avec arraché partiel, d'un dispositif de conditionnement agencé sous la forme d'un enroulement,
- les figures 6 et 7 représentent un autre mode de réalisation, respectivement en vue en plan et en coupe selon BB,
- les figures 8 et 9 représentent un autre mode de réalisation, respectivement en vue en plan et en coupe partielle,

– la figure 10 représente, en coupe partielle un mode de réalisation à plusieurs tubes superposés,

– la figure 11 est une vue schématique montrant un dispositif conforme à l'invention, monté sur la tête d'une machine de mise en oeuvre des pièces distribuées.

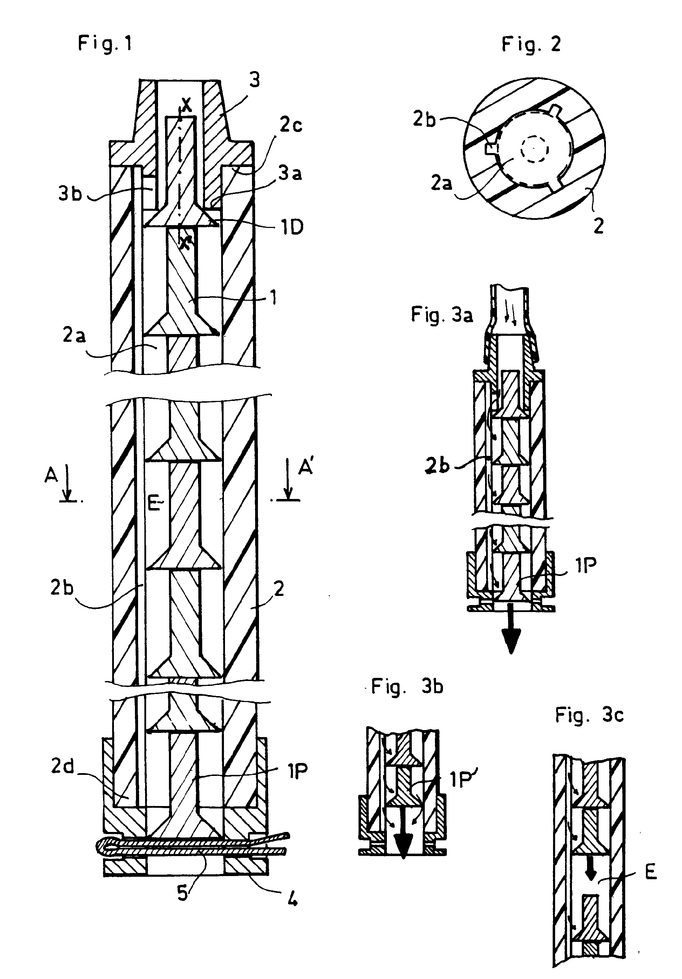

Le dispositif représenté à titre d'exemple aux figures 1 et 2 est destiné à permettre le conditionnement et la distribution d'un grand nombre de pièces identiques présentant une symétrie de révolution autour d'un axe XX', telles que rivets 1.

Ce dispositif comprend un tube cylindrique 2 possédant une âme creuse axiale 2a de forme cylindrique, dont le diamètre est adapté à celui de la plus grande section des rivets à distribuer (tête de rivet) de façon à contenir ceux-ci et à les guider sur leur périphérie avec un jeu de quelques dixièmes de mm au niveau de cette plus grande section. Le tube 1 peut être rigide, semi-rigide ou souple. Selon les exigences de l'application, il peut être prévu rectiligne ou de forme différente (notamment enroulé en spires comme on le verra plus loin afin de réduire l'encombrement de l'ensemble du dispositif).

La longueur de ce tube est adaptée au nombre de pièces que l'on souhaite conditionner. Ce nombre peut être très élevé, et des essais ont été effectués avec des tubes de 33 m de long contenant 3300 rivets, sans conduire à une quelconque difficulté de transfert ou de distribution.

Sur la surface intérieure du tube 2, sont ménagées trois rainures telles que 2b, angulairement disposées à 120°, et qui s'étendent sur toute la longueur du tube. Chacune de ces rainures s'ouvre dans l'âme creuse 2a du tube sur toute la longueur de celle-ci.

A une extrémité du tube (entrée 2c), est fixé notamment par collage un organe d'arrêt constitué par un embout de raccordement 3 à un conduit d'air comprimé. Cet organe forme dans l'âme creuse une butée d'arrêt 3a du dernier rivet 1D et est conformé pour permettre le passage de l'air comprimé (échancrures 3b au droit des rainures).

A l'autre extrémité du tube (extrémité de distribution 2d), est fixé notamment par collage un embout 4 qui porte une clavette amovible 5 retenant le premier rivet 1P de l'empilement. Cet embout 4 est conformé pour être apte à coopérer avec un outil ou une machine de rivetage de type donné.

Les rivets sont conditionnés dans le dispositif décrit immédiatement après une opération de tri qui permet de les sélectionner dans une classe de tolérances déterminées (plus étroites que dans le cas des conditionnements en vrac tels qu'utilisés actuellement, dont les tolérances sont celles du standard de fabrication). Le dispositif de conditionnement conforme à l'invention n'est ouvert par retrait de la clavette 5 qu'au moment de le monter sur la machine à riveter, de sorte qu'aucune pièce étrangère ne peut accidentellement être mêlée au lot. Les caractéristiques du lot concerné seront indiquées sur le tube. Bien entendu, pour éviter l'entrée de poussière dans le tube, les embouts 3 et 4 peuvent être obturés par tout moyen approprié (bouchons amovibles, film rétractable enveloppant l'ensemble...). Lors de leur mise en place, les rivets sont disposés à la suite les uns des autres avec leur axe s'étendant le long de l'axe du tube.

La distribution des rivets à partir du dispositif ci-dessus décrit s'effectue en retirant la clavette 5 et en branchant l'embout de raccordement 3 sur une source d'air comprimé (figure 3a). La pression d'air comprimé s'exerce sur le dernier rivet 1D, mais dès que le nombre de rivets dépasse une à deux dizaines, les effets de coincement sur la colonne empêchent tout déplacement de celle-ci. Dans l'invention, l'air comprimé est distribué par les rainures 2b sur toute la longueur du tube et la pression s'établit dans les espaces de séparation E entre rivets. Dans ces conditions, la colonne n'est plus soumise à une action de poussée conduisant à des coincements, et le fluide exerce son action directement sur le premier rivet 1P. Celui-ci est chassé vers l'extrémité 2d à travers laquelle il est distribué. Dans l'exemple représenté, les rainures 2b sont obturées à l'extrémité de distribution 2d pour déboucher uniquement dans l'âme creuse à l'arrière de la première pièce 1P ; toutefois, une ou plusieurs rainures 2b peuvent déboucher librement vers l'extérieur à l'extrémité de distribution sans nuire au fonctionnement ; compte tenu de la présence de la tête de rivets, l'action pneumatique sur la première pièce est alors accentuée par un effet d'aspiration.

Après expulsion du rivet 1P, le rivet suivant 1P' (figure 3b) devient le premier de la colonne et est soumis à son tour à la pression du fluide (avec en outre l'effet d'aspiration sus-évoqué) : ce rivet se déplace vers l'extrémité de distribution à travers laquelle il est distribué.

Il convient de noter que, lorsqu'un rivet se déplace dans la colonne (figure 3c), il crée une dépression dans l'espace E qui le sépare du rivet suivant, de sorte que celui-ci est soumis à une force pneumatique tendant à le faire avancer dans le tube. La colonne se décale donc progressivement vers l'extrémité de distribution au fur et à mesure que sont distribués les rivets situés en regard de cette extrémité et ce, avec un guidage parfait de chaque rivet au niveau de sa tête.

Ce procédé de distribution permet de disposer un très grand nombre de rivets dans le tube, puisque le transfert et la distribution qui sont dus à un effet pneumatique direct sur le premier rivet sont indépendants du nombre de rivets situés en amont de celui-ci.

Les rainures longitudinales qui permettent à la pression d'air de s'établir sur toute la longueur du tube peuvent être de section quelconque et réalisées par tout procédé (moulage, extrusion, usinage...). Elles peuvent être linéaires (c'est-à-dire parallèles à l'axe du tube) ou en hélice ou de tout autre forme. (Par "rainure longitudinale", on entend une rainure s'étendant dans le sens de la longueur du tube).

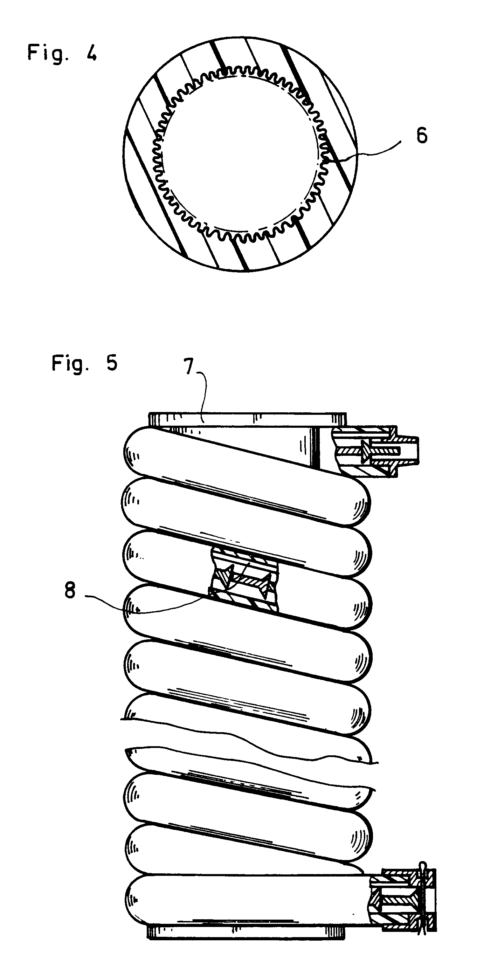

A titre d'exemple, la figure 4 montre en coupe un autre type de tube dans lequel les rainures sont formées par une pluralité de stries 6 qui sont ménagées sur la face interne du tube autour de son âme creuse.

La figure 5 présente un dispositif de conditionnement et de distribution du type décrit précédemment, réalisé au moyen d'un tube souple qui est enroulé sous la forme d'une bobine autour d'un support cylindrique 7. Bien entendu, le rayon de courbure des spires est prévu suffisamment grand par rapport au diamètre du tube pour permettre un glissement sans problème des rivets. Les rainures 8 de distribution de la pression le long du tube sont analogues à celles déjà décrites.

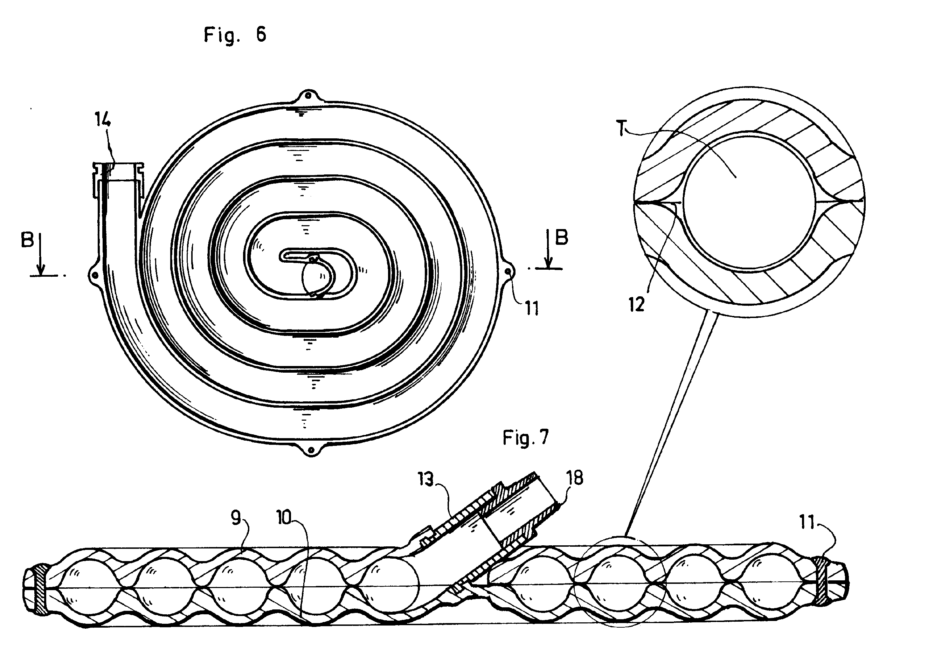

Les figures 6 et 7 présentent un autre mode de réalisation dans lequel le tube de guidage des rivets est enroulé en hélice sous forme d'une galette et est formé par deux demi-coquilles 9 et 10 qui sont assujetties l'une contre l'autre, par exemple au moyen de rivets 11. Chaque demi-coquille est moulée pour former une moitié de la section du tube. Les rainures de distribution de la pression sont formées par des passages 12 venant de moulage, situés au niveau des joints entre demi-coquilles. Sur le détail de la figure 7, on a représenté une tête de rivet T guidée sur sa périphérie dans le tube du dispositif, avec les rainures 12 d'établissement de la pression tout le long du tube. L'entrée du tube, qui est appelé à être connecté à l'air comprimé, peut être formée par des pièces rapportées 13 et 18, la pièce 13 étant insérée entre les deux coquilles au moment de leur accolement ; l'extrémité de distribution peut être dotée comme précédemment d'un embout collé 14.

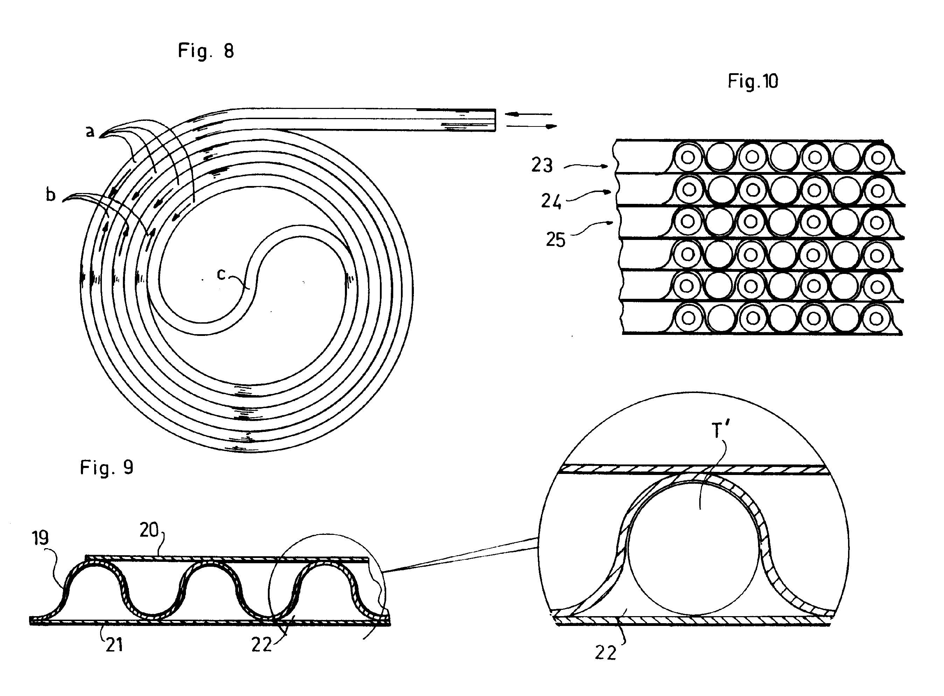

Les figures 8 et 9 présentent un autre mode de réalisation dans lequel le tube de guidage des rivets est enroulé en double hélice aller -a- et retour -b-, avec un raccordement central -c- entre aller et retour. Le tube se présente sous la forme d'une galette formée d'une paroi ondulée 19 et de deux plaques 20 et 21 assujetties de part et d'autre de ladite paroi, par exemple par collage aux sommets des ondulations. Les rainures de distribution de la pression 22 sont situées au niveau des joints entre paroi ondulée et plaques. Sur le détail de la figure 9, on a représenté une tête de rivet T' guidée sur sa périphérie avec les rainures 22 d'établissement de la pression tout le long du tube.

La figure 10 montre un dispositif à plusieurs tubes se présentant sous forme de galettes superposées du type précédent 23, 24, 25... Un tel dispositif permet de conditionner et distribuer un très grand nombre de rivets, avec un encombrement réduit.

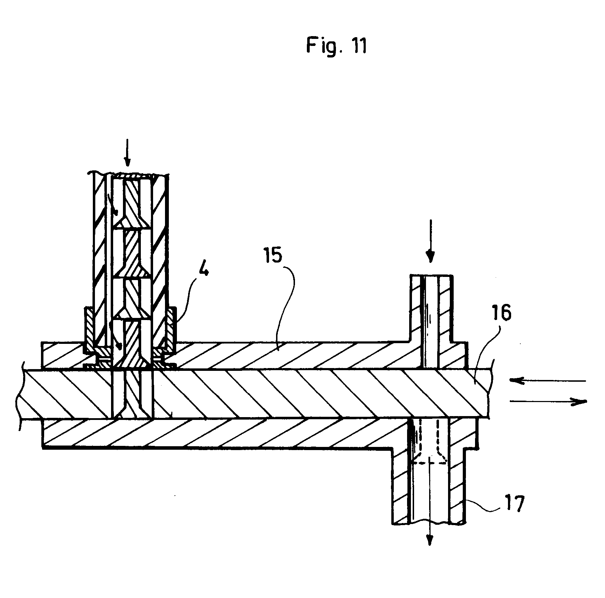

Par ailleurs, à titre d'illustration, la figure 11 présente l'extrémité de distribution d'un dispositif conforme à l'invention, associée à une tête de riveteuse qui réalise une distribution des rivets, un par un, vers les moyens de rivetage. En l'exemple, l'embout 4 du dispositif est fixé sur une platine 15 de la riveteuse et un tiroir mobile 16 reçoit chaque rivet à la sortie du tube de distribution pour le transférer vers un tube 17 d'alimentation des moyens de rivetage.

**Revendications**

1. Procédé de distribution de pièces identiques présentant une symétrie de révolution autour d'un axe, dans lequel l'on utilise un tube (2) présentant une âme creuse (2a) de forme adaptée à la section transversale de plus grand diamètre des pièces de façon à pouvoir assurer un guidage périphérique desdites pièces au niveau de cette section, l'on dispose les pièces les unes à la suite des autres à l'intérieur du tube (2) avec leurs axes de révolution s'étendant selon l'axe longitudinal dudit tube et l'on alimente ledit tube en fluide comprimé en vue d'assurer le transfert des pièces vers une extrémité ouverte dudit tube, dite extrémité de distribution (2d), caractérisé en ce que :

. les pièces (1) sont préalablement conditionnées dans le tube (2) avec des organes d'arrêt (3, 4) prévus à ses extrémités, l'organe d'arrêt (4) situé à l'extrémité de distribution étant retiré avant d'assurer la distribution,

. l'on admet le fluide comprimé dans le tube à l'arrière de la dernière pièce (ID) par l'extrémité (2c) du tube opposée à l'extrémité de distribution (2d), et on le distribue sur la longueur du tube à l'intérieur d'au moins une rainure longitudinale (2b) ménagée sur la surface interne dudit tube pour s'ouvrir dans l'âme creuse (2a) de celui-ci de sorte que la pression du fluide s'exerce tout le long de l'âme creuse dans les espaces (E) de séparation entre pièces, jusqu'à la première pièce (1P) sur laquelle ladite pression agit pour en assurer le transfert vers l'extrémité de distribution (2d).

2. Procédé selon la revendication 1, caractérisé en ce que l'on distribue le fluide comprimé à l'intérieur de plusieurs rainures linéaires (2b) réparties autour de l'âme creuse (2a).

3. Procédé selon l'une des revendications 1 ou 2, caractérisé en ce que l'une ou plusieurs des rainures débouchent librement vers l'extérieur à l'extrémité de distribution.

4. Procédé selon l'une des revendications 1 ou 2, caractérisé en ce que la ou les rainures (2b) sont obturées à l'extrémité de distribution pour déboucher uniquement dans l'âme creuse à l'arrière de la première pièce.

5. Procédé selon l'une des revendications 1, 2, 3 ou 4, en vue de la distribution de rivets sélectionnés dans une classe de tolérances déterminées.

6. Dispositif de conditionnement et de distribution de pièces identiques en vue de la mise en oeuvre du procédé conforme à l'une des revendications 1 à 5, comprenant au moins un tube (2) à âme creuse (2a) adaptée pour contenir et guider les pièces les unes à la suite des autres, caractérisé par au moins une rainure (2b) ménagée sur la surface interne du tube de façon à s'ouvrir dans son âme creuse sur la longueur de celle-ci, et des organes d'arrêt (3, 4) situés aux extrémités du tube pour retenir les pièces, l'organe d'arrêt (4) situé à l'extrémité de distribution étant amovible.

7. Dispositif selon la revendication 6, caractérisé en ce que le tube (2) comprend plusieurs rainures linéaires (2b) réparties autour de son âme creuse.

8. Dispositif selon la revendication 7, caractérisé en ce que le tube est enroulé en hélice sous forme d'une galette formée de deux demi-coquilles (9, 10) assujetties l'une contre l'autre, les rainures (12) étant situées au niveau des joints entre demi-coquilles.

9. Dispositif selon la revendication 7, caractérisé en ce que le tube est enroulé en double hélice aller-retour avec un raccordement central entre aller et retour, ledit tube se présentant sous la forme d'une galette formée d'une paroi ondulée et deux plaques assujetties de part et d'autre de ladite paroi, les rainures étant situées au niveau des joints entre paroi ondulée et plaques.

10. Dispositif selon l'une des revendications 8 et 9, caractérisé en ce qu'il comprend plusieurs tubes sous forme de galettes superposées.

11. Dispositif selon l'une des revendications 6 à 10, caractérisé en ce que l'un des organes d'arrêt (3) est constitué par un embout de raccordement à un conduit de fluide comprimé, l'autre organe d'arrêt (4) étant un embout doté d'une clavette amovible (5).

12. Dispositif selon l'une des revendications 6 à 11, dans lequel le tube (2) est rempli de rivets (1) disposés en colonne les uns à la suite des autres.

**Claims**

1. Method for distributing identical parts with a rotational symmetry about an axis, in which use is made of a tube (2) with a hollow core (2a) of a shape adapted to the cross-section with the largest diameter of the parts so as to be able to ensure peripheral guiding of said parts at the level of said section, in which one arranges the parts one after the other inside tube (2) with their axes of rotation extending along the longitudinal axis of said tube and in that one feeds said tube with compressed fluid in order to ensure transfer of the parts towards an open end of said tube, the so-called distribution end (2d), characterised in that :

. parts (1) are prepacked within tube (2), stop elements (3, 4) being provided at its ends, whereby stop element (4) situated at the distribution end is retracted prior to ensuring distribution,
. the compressed fluid is introduced into the tube at the rear of the last part (1D) through end (2c) of the tube opposite distribution end (2d), said fluid being distributed along the tube within at least one longitudinal groove (2b) provided on the internal surface of said tube so as to open out into hollow core (2a) of the latter so that the pressure of the fluid acts along the entire hollow core within the spaces (E) separating the parts, as far as first part (1P) on which said pressure acts so as to ensure the transfer towards distribution end (2d).

2. Method according to claim 1, characterised in that one distributes the compressed fluid within several linear grooves (2b) arranged about hollow core (2a).

3. Method according to one of claims 1 or 2, characterised in that one or several of the grooves open out freely towards the outside, at the distribution end.

4. Method according to one of claims 1 or 2, characterised in that groove or grooves (2b) are blocked at the distribution end so as to open out only into the hollow core, at the rear of the first part.

5. Method according to one of claims 1, 2, 3 or 4, with a view to distributing rivets selected within a class of predetermined tolerances.

6. Device for packing and distributing identical parts, with a view to implementing the method according to one of claims 1 to 5, comprising at least one tube (2) with a hollow core (2a) designed to contain and guide the parts one after the other, characterised by at least one groove (2b) provided on the internal surface of the tube so as to open out into its hollow core along the latter as well as stop elements (3, 4) situated at the ends of the tube in order to retain the parts, stop element (4) which is situated at the distribution end being removable.

7. Device according to claim 6, characterised in that tube (2) comprises several linear grooves (2b) arranged about its hollow core.

8. Device according to claim 7, characterised in that the tube is wound in a spiral so as to form a flat coil consisting of two half-shells (9, 10) fastened to one another, the grooves (12) being situated at the level of the joints between their half-shells.

9. Device according to claim 7, characterised in that the tube is wound in a double two-and-fro spiral with a central connection between to and fro, said tube having the shape of a flat coil consisting of a corrugated wall and two plates fastened at either side of said wall, the grooves being situated at the level of the joints between the corrugated wall and the plates.

10. Device according to one of claims 8 and 9, characterised in that it comprises several tubes in the shape of superimposed flat coils.

11. Device according to one of claims 6 to 10, characterised in that one of stop elements (3) is constituted by a socket for connection to a conduit of compressed fluid, the other stop element (4) being a socket provided with a removable cotter pin (5).

12. Device according to one of claims 6 to 11, in which tube (2) is filled with rivets (1) arranged in a column one after the other.

## Patentansprüche

1. Verfahren zum Verteilen von identischen Maschinenelementen mit Drehungssymmetrie um eine Achse, bei dem von einem Rohr (2) mit einem Hohlkern (2a) Gebrauch gemacht wird, wobei die Form des besagten Hohlkerns dem querschnitt mit dem größten Durchmesser der Maschinenelemente entspricht, so daß periphere Führung der besagten Maschinenelemente in Höhe dieses Querschnitts gewährleistet werden kann, bei dem die Maschinenelemente hintereinander innerhalb des Rohres (2) angeordnet werden, wobei sich deren Drehachsen entlang der Längsachse des besagten Rohres erstrecken, und bei dem man das besagte Rohr mit Druckflüssigkeit speist, um die Übertragung der Maschinenelemente zu einem offenen Ende des besagten Rohres, dem sogenannten Verteilende (2d), zu gewährleisten, dadurch gekennzeichnet,
– daß die Maschinenelemente (1) im voraus in Rohr (2) eingeführt werden, während Anschlagelemente (3, 4) an den Enden des besagten Rohres vorgesehen sind und Anschlagelement (4) am Verteilende vor dem Bewirken der Verteilung zurückgezogen wird,
– daß man die Druckflüssigkeit hinter dem letzten Maschinenelement (1D) in das Rohr einführt, und zwar durch das dem Verteilende (2d) gegenüberliegende Ende (2c) des Rohres, und daß man die besagte Druckflüssigkeit innerhalb mindestens einer an der Innenfläche des besagten Rohres vorgesehenen Längsrille (2b) entlang des Rohres verteilt, wobei die besagte Rille in den Hohlkern (2a) des besagten Rohres so mündet, daß der Flüssigkeitsdruck innerhalb der die Maschinenelemente trennenden Räume (E) entlang des gesamten Hohlkerns wirksam wird, und zwar bis zu dem ersten Maschinenelement (1P), auf das der besagte Druck so einwirkt, daß die Übertragung auf das Verteilende (2d) zu gewährleistet wird.

2. Verfahren nach Anspruch 1, dadurch gekennzeichnet, daß man die Druckflüssigkeit innerhalb mehrerer Linearrillen (2b) rings um den Hohlkern (2a) verteilt.

3. Verfahren nach einem der Ansprüche 1 oder 2, dadurch gekennzeichnet, daß eine oder mehrere Rillen am Verteilende unbehindert nach außen führen.

4. Verfahren nach einem der Ansprüche 1 oder 2, dadurch gekennzeichnet, daß die Rille bzw. Rillen (2b) am Verteilende blockiert ist/sind, um ausschließlich hinter dem ersten Maschinenelement in den Hohlkern zu münden.

5. Verfahren nach einem der Ansprüche 1, 2, 3 oder 4, zwecks Verteilung von innerhalb einer Klasse vorbestimmter Toleranzen ausgewählten Nieten.

6. Vorrichtung zum Einführen und Verteilen identischer Maschinenelemente zwecks Durchführung des Verfahrens nach einem der Ansprüche 1 bis 5, umfassend mindestens ein Rohr (2) mit einem Hohlkern (2a), der so beschaffen ist, daß er die Maschinenelemente nacheinander enthält und führt, gekennzeichnet durch mindestens eine an der Innenfläche des Rohres vorgesehene Rille (2b), die so beschaffen ist, daß sie der Länge nach in den Hohlkern des Rohres mündet, sowie durch zum Einbehalten der Maschinenelemente dienende Anschlagelemente (3, 4) an den Enden des Rohres, wobei Anschlagelement (4) am Verteilende entfernbar ist.

7. Vorrichtung nach Anspruch 6, dadurch gekennzeichnet, daß Rohr (2) rings um seinen Hohlkern mehrere Linearrillen (2b) aufweist.

8. Vorrichtung nach Anspruch 7, dadurch gekennzeichnet, daß das Rohr spiralförmig in der Form einer aus zwei Halbschalen (9, 10) bestehenden Flachscheibe gewickelt ist, wobei die besagten Halbschalen aneinander befestigt sind und die Rillen (12) sich im Bereich der Anschlüsse zwischen den Halbschalen befinden.

9. Vorrichtung nach Anspruch 7, dadurch gekennzeichnet, daß das Rohr als Hin- und Her-Doppelspirale gewickelt ist mit einer zentralen Verbindung zwischen dem hin- und dem hergehenden Zweig, wobei das besagte Rohr eine durch eine gewellte Wand und zwei zu beiden Seiten der besagten Wand befestigte Platten gebildet wird, während sich die Rillen im Bereich der Anschlüsse zwischen der gewellten Wand und den Platten befinden.

10. Vorrichtung nach einem der Ansprüche 8 und 9, dadurch gekennzeichnet, daß sie mehrere Rohre in der Form übereinandergelagerter Flachscheiben umfaßt.

11. Vorrichtung nach einem der Ansprüche 6 bis 10, dadurch gekennzeichnet, daß eines der Anschlagelemente (3) in einem Sockel zum Anschluß an eine Druckflüssigkeitsleitung besteht, während das andere Anschlagelement (4) ein mit einem entfernbaren Splint (5) versehener Sockel ist.

12. Vorrichtung nach einem der Ansprüche 6 bis 11, bei dem das Rohr (2) mit in einer Kolonne nacheinander angeordneten Nieten (1) gefüllt ist.

Fig. 1

Fig. 2

Fig. 3a

Fig. 3b

Fig. 3c

Fig. 4

6

Fig. 5

7

8

Fig. 6

Fig. 7

Fig. 8

Fig. 9

Fig.10

EP 0 373 685 B1

# Fig. 11

4

15

16

17